(19) **Europäisches Patentamt / European Patent Office / Office européen des brevets**

(11) **EP 2 198 312 B1**

(12) **FASCICULE DE BREVET EUROPEEN**

(45) Date de publication et mention
de la délivrance du brevet:
**20.03.2013 Bulletin 2013/12**

(21) Numéro de dépôt: **08774092.4**

(22) Date de dépôt: **16.06.2008**

(51) Int Cl.:
*G01P 1/00* (2006.01)   *G01P 15/097* (2006.01)
*H03F 1/00* (2006.01)   *H04R 3/00* (2006.01)

(86) Numéro de dépôt international:
**PCT/EP2008/057549**

(87) Numéro de publication internationale:
**WO 2008/155312 (24.12.2008 Gazette 2008/52)**

(54) **DISPOSITIF ELECTROSTATIQUE D'AMORTISSEMENT D'UN MOUVEMENT DE VIBRATIONS MECANIQUES D'UN MOBILE RESONANT**

ELEKTROSTATISCHE VORRICHTUNG ZUR DÄMPFUNG EINER MECHANISCHEN VIBRATIONSBEWEGUNG EINES BEWEGLICHEN RESONANZKÖRPERS

ELECTROSTATIC DEVICE FOR DAMPING A MECHANICAL VIBRATION MOVEMENT OF A RESONANT MOVING OBJECT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.06.2007 FR 0704362**

(43) Date de publication de la demande:
**23.06.2010 Bulletin 2010/25**

(73) Titulaire: **THALES**
**92200 Neuilly-sur-Seine (FR)**

(72) Inventeurs:
• **QUER, Régis**
**F-07130 Saint Peray (FR)**

• **TAURAND, Christophe**
**F-26000 Valence (FR)**

(74) Mandataire: **Esselin, Sophie**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 431 807   GB-A- 514 418**
**US-A- 4 104 920   US-A- 5 675 296**

**EP 2 198 312 B1**

**Description**

Le domaine de l'invention est celui de l'amortissement sélectif de modes de vibration. L'invention présente un intérêt particulier pour réduire des modes de vibration parasites d'un capteur électromécanique résonant.

Il est connu que des capteurs électromécaniques résonants peuvent êtes employés pour mesurer différentes grandeurs physiques : une pression, une accélération, ou une vitesse angulaire. De tels capteurs comportent une structure vibrante : c'est à partir d'une exploitation d'un mode de vibration particulier de la structure vibrante, appelé « mode utile », qu'on évalue une information liée à la grandeur physique à mesurer avec une haute performance. Par exemple, une variation de fréquence de vibration d'une poutre vibrante d'un capteur de pression permet d'évaluer une pression s'exerçant sur la poutre.

Il est souvent nécessaire de recourir à de fortes surtensions mécaniques des modes utiles. Ces surtensions sont en général, obtenues au moyen d'une optimisation entre trois facteurs principaux :

- un choix de matériau de la structure vibrante, qui conduit, le plus souvent à un choix de matériau cristallin;
- une conception mécanique de la structure qui doit être adaptée au mode utile choisi et,
- une création d'un vide assez poussé autour de la structure vibrante.

Parallèlement, la présence de modes parasites peut avoir pour effet de dégrader la performance du capteur car elle agit également sur le mode utile. Cette dégradation est souvent d'autant plus importante que le mode parasite est surtendu.

Des solutions relevant de l'art antérieur existent pour amortir ces modes parasites, on peut citer par exemple : un amortissement actif ou passif par effet piézo-électrique (comme par exemple le document US 4 104 920), un amortissement gazeux (comme par exemple le document EP 0 431 807) un amortissement par couplage mécanique avec d'autres modes plus amortis et enfin, un amortissement par adjonction de matériaux à fortes pertes mécaniques comme par exemple des colles.

Ces différentes solutions ne sont pas parfaites et amènent chacune certains inconvénients. En particulier, un amortissement par effet piézo-électrique nécessite de réaliser des dépôts de matériau piézo-électrique sur des substrats ainsi que des dépôt d'électrodes : ces dépôts constituent des apports de matériaux dont les caractéristiques dégradent les performances du capteur. Par ailleurs, un amortissement gazeux nécessite d'encapsuler les structures vibrantes dans une atmosphère spécifique et d'assurer la stabilité de cette atmosphère dans le temps. Sauf à confiner les gaz dans certaines zones à proximité des structures, ce qui présente des coûts élevés de mise au point et de maintien en conditions opérationnelles, cette solution présente en outre l'inconvénient d'amortir tous les modes de vibration :aussi bien les modes parasites que les modes utiles.

Il est connu qu'en général, les solutions de l'art antérieur pour amortir des vibrations parasites induisent les inconvénients suivants : un ajout de matériau dégradant les performances du capteur, une absence de sélectivité dans les modes de vibration amortis, une complexification de l'architecture mécanique des capteurs et enfin une augmentation sensible de leurs coûts de fabrication.

Le but de l'invention est de pallier ces inconvénients. Plus précisément l'invention a pour objet un dispositif d'amortissement électrostatique d'un mouvement de vibration d'un mobile, le mobile étant réalisé en matériau électriquement conducteur, le mouvement du mobile comportant au moins un mode de vibration parasite de fréquence fp à amortir, le dispositif comportant une électrode formant avec le mobile un entrefer de capacité polarisée sous une tension continue par un circuit de polarisation, le circuit de polarisation comprenant, reliés électriquement en série avec l'électrode :

une résistance de charge ;

- éventuellement une inductance ;
- une capacité parasite

caractérisé en ce que le circuit de polarisation comporte, en outre, un dispositif électronique compensateur d'impédance, qui comprend une composante de capacitance et une composante de résistance, et éventuellement une composante d'inductance

Un premier avantage du dispositif selon l'invention réside dans la sélectivité de l'amortissement qu'il procure. Cette sélectivité peut porter à la fois sur le mode que l'on amortit mais aussi sur une bande de fréquence prédéterminée. Ainsi, grâce à l'invention, il est possible de choisir un ou des modes de vibration que l'on souhaite amortir et de lui, ou de leur, affecter un facteur de surtension donné, sur une bande de fréquence de largeur déterminée. Eventuellement, la largeur de la bande vaut 100 Hertz.

Un deuxième avantage du dispositif d'amortissement selon l'invention tient en ce qu'il réalise un amortissement

2

de modes parasites sans nécessiter d'apport de matière solide sur des éléments du capteur, comme par exemple un dépôt de matériau piézo-électrique sur une partie mobile de structures vibrantes.

Un troisième avantage du dispositif selon l'invention tient en ce qu'il ne nécessite pas une encapsulation du capteur dans une enceinte hermétique garantissant une atmosphère particulière.

Un autre avantage de l'invention réside dans les caractères réversibles et activables du dispositif selon l'invention. Ainsi, un capteur électromécanique comportant un dispositif selon l'invention n'a pas l'obligation de le faire fonctionner pour réaliser une mesure. Lorsque le dispositif selon l'invention est hors-fonctionnement, le capteur comportant le dispositif peut néanmoins réaliser une mesure. Cette faculté permet au dispositif selon l'invention de jouer un rôle préventif par exemple pour pallier des dégradations du capteur apparaissant au cours du vieillissement du capteur par exemple en s'intégrant à un dispositif d'autotest et de surveillance du capteur.

Enfin, un dernier avantage présenté par le dispositif selon l'invention est de permettre de compenser en outre des effets d'une capacité parasite apparaissant dans le capteur.

D'autres caractéristiques et avantages de l'invention apparaîtront à la lecture de la description détaillée qui suit, faite à titre d'exemple non limitatif et en référence aux dessins annexés dans lesquels :

- la figure 1a représente un schéma de principe d'un dispositif d'amortissement associé à un système masse-ressort représentatif d'un mode de résonance à amortir ;
- la figure 1b représente un schéma électrique équivalent au dispositif d'amortissement associé au système masse-ressort représentés sur la figure 1a ;
- la figure 2 représente un premier exemple de circuit de polarisation comportant un dispositif électronique compensateur d'un dispositif d'amortissement selon l'invention ;
- la figure 3a représente un premier mode de réalisation d'un dispositif électronique compensateur d'un dispositif d'amortissement selon l'invention ;
- la figure 3b représente le schéma électrique équivalent au premier mode de réalisation ;
- la figure 4a représente un deuxième mode de réalisation d'un dispositif électronique compensateur d'un dispositif d'amortissement selon l'invention ;
- la figure 4b représente le schéma électrique équivalent au deuxième mode de réalisation ;
- la figure 5a représente un troisième mode de réalisation d'un dispositif électronique compensateur d'un dispositif d'amortissement selon l'invention ;
- la figure 5b représente le schéma électrique équivalent au troisième mode de réalisation ;

D'une figure à l'autre, les mêmes éléments sont repérés par les mêmes références.

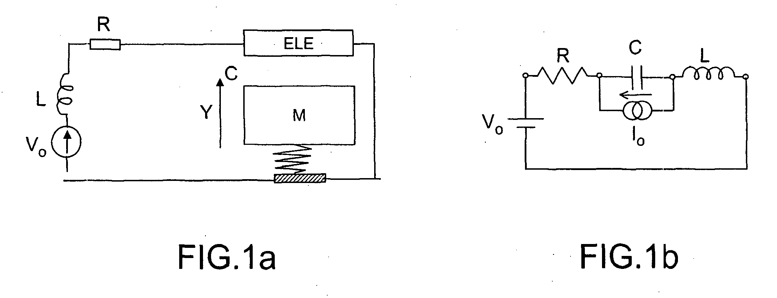

Considérons un mode de vibration d'un capteur électromécanique que l'on souhaite amortir : on peut représenter ce mode de vibration par un système masse-ressort, comme par exemple sur la figure 1a. Dans ce cas, le système masse-ressort est composé d'une masse sismique M liée à un ressort de coefficient de raideur k. La masse sismique se déplace à une fréquence égale à $f_M = 1/2\pi\sqrt{k/M}$ qui correspond au mode de vibration à amortir.

Cette représentation de principe peut tout à fait correspondre à une réalité, c'est le cas par exemple pour un capteur électromécanique plan comportant une structure mobile, un dispositif de détection de mouvement suivant un axe sensible Y du plan, un dispositif d'amplification de force pour augmenter la sensibilité du capteur. M est la masse sismique de la structure mobile et k est un coefficient de raideur équivalent selon l'axe sensible du dispositif d'amplification de force.

Il est connu, qu'un amortissement du mode de vibration peut être obtenu par un transfert d'énergie du système masse-ressort vers un élément électrique de dissipation R. Le transfert d'énergie est réalisé en positionnant une électrode ELE à proximité de la masse sismique. L'électrode est polarisée sous une tension $V_0$ continue et l'élément électrique de dissipation R est inséré en série dans un circuit de polarisation de l'électrode ELE.

L'électrode ELE forme avec la masse sismique M un entrefer de capacité C. Lorsqu'une inductance L étant insérée en série dans le circuit de polarisation et lorsque cette inductance L est choisie pour être accordée à la capacité C de l'entrefer, on maximise l'intensité électrique traversant l'élément électrique de dissipation R en évitant une énergie réactive:

Le schéma électrique décrivant un dispositif électrostatique d'amortissement est représenté sur la figure 1 b. Dans ce cas, la puissance P dissipée par effet Joule dans l'élément électrique de dissipation R est :

$$P = \frac{R|I_0|^2}{2\left[\left(1 - \frac{\omega^2}{\omega_0^2}\right)^2 + R^2 C^2 \omega^2\right]} \quad \text{où } \omega_0^2 = 1/(L.C) \ .$$

La puissance P est maximale lorsque $\omega = \omega_0$. Si on choisit l'inductance L de façon à ce que $1/(L.C) = (2\pi)^2 . (f_M)^2$, c'est à dire de façon à ce que la fréquence de résonance du circuit électrique de polarisation corresponde à la fréquence du mode à amortir, le maximum de puissance P correspond à une atténuation maximale du mode à amortir.

Pour situer les ordres de grandeurs, dans un MEMS, comme un accéléromètre micro-usiné, une masse sismique a des dimensions latérales comprises entre quelques micromètres et quelques millimètres. Par exemple, une masse mobile qui a une longueur l = 5 mm, une largeur L = 60$\mu$m, qui est éloignée d'une électrode de mêmes dimensions d'une distance d = 3,5$\mu$m, la capacité de l'entrefer a une valeur qui correspond à $\varepsilon_0$.l.L/d, où $\varepsilon_0$ est la permittivité du vide et vaut $8,85 \times 10^{-12}$ C$^2$/(N$\times$m$^2$), c'est à dire, que la capacité C a une valeur égale environ à 750 fF. Ainsi, pour une valeur de fréquence $f_M$ à amortir égale à 4 Kilo-Hertz, la valeur d'inductance L nécessaire vaut environ 2000 Henry. Cette valeur d'inductance très élevée n'est pas atteignable avec un simple composant électronique.

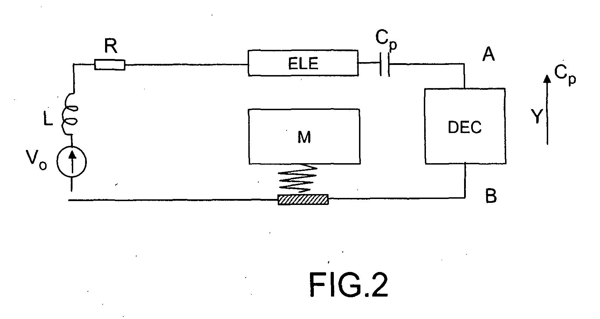

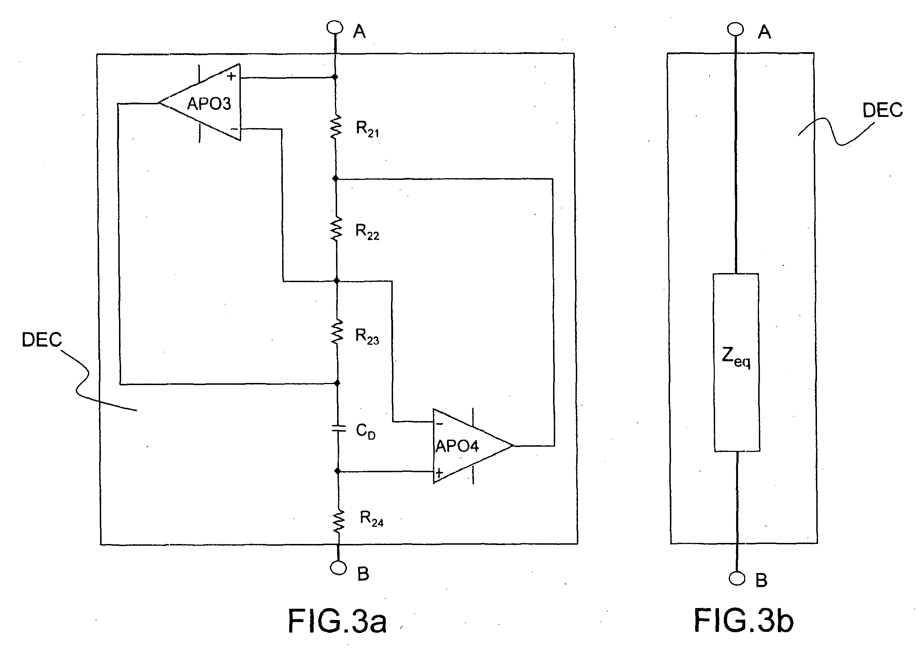

On peut néanmoins émuler une valeur élevée d'inductance en interposant en série dans le circuit de polarisation un dispositif électronique compensateur DEC d'impédance $Z_{eq}$ comportant une valeur d'inductance non nulle comme illustré en figure 2. Un premier mode de réalisation d'un dispositif de compensation du dispositif d'amortissement selon l'invention est représenté sur la figure 3a.

Avantageusement, si la composante d'inductance $L_{eq}$ a une valeur non nulle, la capacité C et la composante d'inductance $L_{eq}$ sont liées à $f_p$ par une relation de la forme : $\dfrac{1}{\sqrt{(L + L_{eq}).C}} = 2\pi.f_p$.

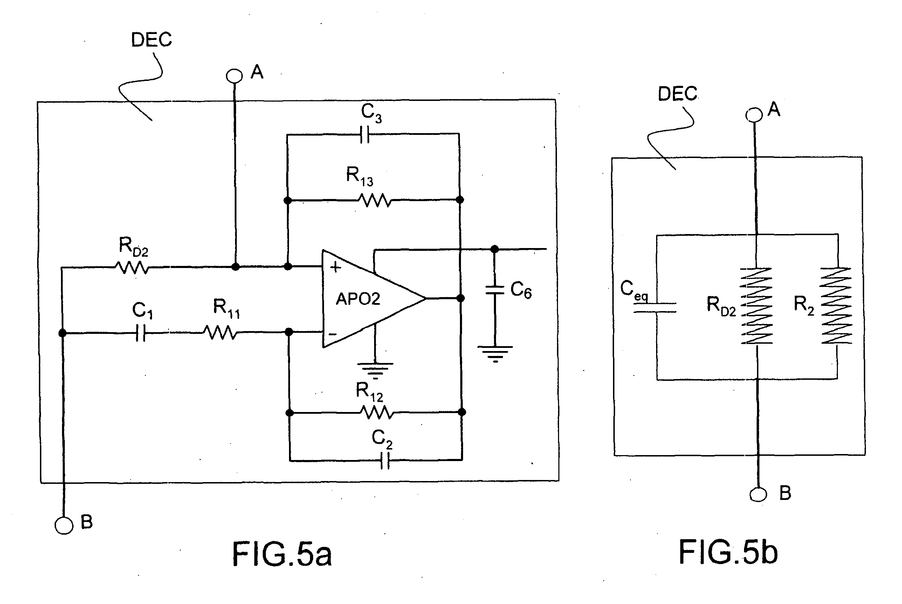

Ce dispositif est connu sous le nom de « montage à gyrateur ». La figure 3b représente un circuit équivalent à celui présenté sur la figure 5a. L'inductance équivalente $L_{eq}$ vaut $R_{23} * C * R_{24}/R_{22}$. La valeur des différentes résistances du dispositif électronique de compensation sont ajustées de manière à ce que L et $L_{eq}$ soient liées avec fp par la relation présentée ci-dessus.

Une solution alternative consiste à réaliser des circuits de polarisation comportant une inductance de valeur nulle. Dans ce cas, la puissance P dissipée par effet Joule peut s'exprimer sous la forme suivante :

$P = \dfrac{R|I_0|^2}{2\left[1 + R^2 C^2 \omega^2\right]}$. La puissance P est maximale pour $RC\omega = 1$ et vaut alors $\dfrac{R.|I_0|^2}{4}$.

Avantageusement, si l'inductance L possède une valeur nulle et si la composante d'inductance $L_{eq}$ a une valeur nulle, la résistance de charge R et la capacité C sont liées à $f_p$ par une relation de la forme $R.C = 1/(2n.f_p)$.

En pratique, pour des capteurs électromécaniques réalisés par usinage de substrat de Silicium SOI, il est très difficile d'éviter qu'une capacité parasite Cp apparaisse en série avec la capacité C de l'entrefer sur le circuit de polarisation : le schéma électrique similaire à celui présenté sur la figure 2. On peut montrer que les performances d'amortissement sont dégradées, c'est à dire que la puissance dissipée P est réduite, par cette capacité parasite Cp en effet, en posant $C_T = C + Cp$, la puissance P prend l'expression suivante : $P = \dfrac{2d^2 M\omega^2}{CV_0^2} \cdot \dfrac{1 + (RC_T\omega)^2}{2RC\omega}$

Où d est une distance séparant la masse sismique de la structure vibrante de l'électrode et M est la masse de la structure vibrante.

Le problème posé par la dégradation des performances d'amortissement peut être résolu en intégrant dans le circuit électrique de polarisation du dispositif d'amortissement, un dispositif de compensation qui compense l'effet de la capacité parasite.

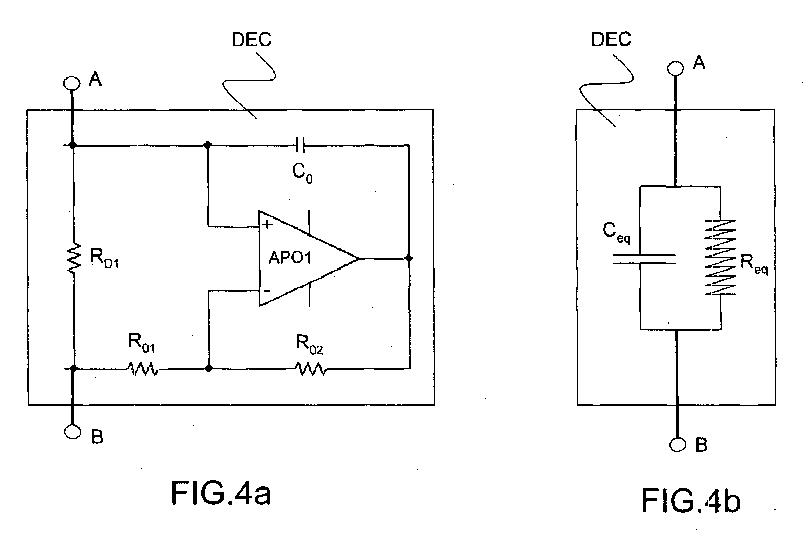

Un deuxième mode de réalisation d'un dispositif de compensation du dispositif d'amortissement selon l'invention est représenté sur la figure 4a. Ce circuit électronique qui comporte un amplificateur est connu classiquement sous l'acronyme anglais VNIC (pour « Voltage Negative Impedance Converter »), il est équivalent à une résistance $R_{01}$ reliée en parallèle à une capacité de valeur $C_{eq} = -C.R_{02}/R_{01}$ entre les bornes A et B, comme présenté sur la figure 4b.

Avantageusement, la composante de capacitance $C_{eq}$ a une valeur égale à -Cp

Un troisième mode de réalisation d'un dispositif de compensation du dispositif d'amortissement selon l'invention est représenté sur la figure 5a. Ce circuit électronique est équivalent à trois composants passifs reliés en parallèle, comme présenté sur la figure 5b.

- une résistances $R_{D2}$
- $R_2 = -C_3.Z_1/Z_2$
- une capacité de valeur $C_{eq} = -C_6.Z_2/Z_1$.

On emploie les notation suivantes $Z_1 = 1/jC_1\omega + R_{11}$ et $1/Z_2 = jC_2\omega + 1/R_{12}$

Ce troisième mode de réalisation présente en outre l'intérêt de réduire la résistance totale consitituée par la somme de $R_{eq}$ et de R pour réduire certaines dérives d'offset.

Avantageusement, la composante de résistance $R_{eq}$ a une valeur égale à -R.

## Revendications

1. Dispositif électrostatique d'amortissement d'un mouvement de vibrations mécaniques d'un mobile, le mobile étant réalisé en matériau électriquement conducteur, le mouvement du mobile comportant au moins un mode de vibration parasite de fréquence fp à amortir, le dispositif comportant une électrode ELE formant avec le mobile un entrefer de capacité C polarisée sous une tension continue $V_0$ par un circuit de polarisation, le circuit de polarisation comprenant, reliés électriquement en série avec l'électrode ELE :

   - une résistance de charge R ;
   - éventuellement une inductance L ;
   - une capacité parasite $C_p$.

   **caractérisé en ce que** le circuit de polarisation comporte, en outre, un dispositif électronique compensateur DEC d'impédance $Z_{eq}$, qui comprend une composante de capacitance $C_{eq}$, une composante de résistance $R_{eq}$, et éventuellement une composante d'inductance $L_{eq}$.

2. Dispositif selon la revendication 1, **caractérisé en ce que** la composante de capacitance $C_{eq}$ a une valeur égale à -Cp.

3. Dispositif selon l'une des revendications 1 ou 2, **caractérisé en ce que** si la composante d'inductance $L_{eq}$ a une valeur non nulle, la capacité C et la composante d'inductance $L_{eq}$ sont liées à fp par une relation de la forme :

$$\frac{1}{\sqrt{(L + L_{eq}).C}} = 2\pi.f_p.$$

4. Dispositif selon l'une des revendications 1 ou 2, **caractérisé en ce que** si l'inductance L possède une valeur nulle et si la composante d'inductance $L_{eq}$ a une valeur nulle, la résistance de charge R et la capacité C sont liées à $f_p$ par une relation de la forme $R.C = 1/(2\pi.f_p)$.

## Claims

1. An electrostatic device for damping a mechanical vibration movement of a mobile object, said mobile object being made from an electrically conducting material, the movement of said mobile object comprising at least one parasitic vibration mode of frequency fp to be damped, said device comprising an electrode ELE that with said mobile object forms a gap of capacitance C that is polarised with a DC voltage $V_o$ by a polarisation circuit, said polarisation circuit comprising, electrically connected in series with said electrode ELE:

   - a charge resistor R;
   - optionally an inductor L;
   - a parasitic capacitance Cp;

   **characterised in that** said polarisation circuit further comprises an electronic compensating device DEC of impedance $Z_{eq}$, which comprises a capacitor component $C_{eq}$, a resistor component $R_{eq}$ and optionally an inductor component $L_{eq}$.

2. The device according to claim 1, **characterised in that** the value of the capacitor component $C_{eq}$ is equal to -Cp.

3.  The device according to claim 1 or 2, **characterised in that** if the inductor component $L_{eq}$ has a non-zero value, the capacitance C and the inductor component Leq are linked to $f_p$ by a relation that is expressed as:

$$\frac{1}{\sqrt{(L+L_{eq}).C}} = 2\pi.f_p.$$

4.  The device according to claim 1 or 2, **characterised in that** if the inductor L has a zero value and if the inductor component $L_{eq}$ has a zero value, the charge resistor R and the capacitance C are linked to fp by a relation that is expressed as $R.C=1/(2\pi.f_p)$.

**Patentansprüche**

1.  Elektrostatische Vorrichtung zum Dämpfen einer mechanischen Vibrationsbewegung eines beweglichen Objekts, wobei das bewegliche Objekt aus elektrisch leitendem Material besteht, wobei die Bewegung des beweglichen Objekts wenigstens eine zu dämpfende parasitäre Vibrationsmode mit Frequenz fp beinhaltet, wobei die Vorrichtung eine Elektrode ELE umfasst, die mit dem beweglichen Objekt einen Spalt mit Kapazität C bildet, der unter einer Gleichspannung $V_o$ durch eine Polarisationsschaltung polarisiert wird, wobei die Polarisationsschaltung in Serie mit der Elektrode ELE geschaltet Folgendes umfasst:

    - einen Ladungswiderstand R;
    - eventuell einen Induktor L;
    - eine parasitäre Kapazität Cp;

    **dadurch gekennzeichnet, dass** die Polarisationsschaltung ferner eine elektronische Kompensationsvorrichtung DEC mit Impedanz $Z_{eq}$ umfasst, die eine Kondensatorkomponente $C_{eq}$, eine Widerstandskomponente $R_{eq}$ und eventuell eine Induktorkomponente $L_{eq}$ umfasst.

2.  Vorrichtung nach Anspruch 1, **dadurch gekennzeichnet, dass** die Kondensatorkomponente $C_{eq}$ einen Wert von -Cp hat.

3.  Vorrichtung nach Anspruch 1 oder 2, **dadurch gekennzeichnet, dass**, wenn die Induktorkomponente $L_{eq}$ einen Wert von ungleich null hat, die Kapazität C und die Induktorkomponente $L_{eq}$ mit fp durch eine Beziehung verknüpft sind, die ausgedrückt wird durch: $\frac{1}{\sqrt{(L+L_{eq}).C}} = 2\pi.f_p.$

4.  Vorrichtung nach Anspruch 1 oder 2, **dadurch gekennzeichnet, dass**, wenn der Induktor L einen Wert von null hat und wenn die Induktorkomponente $L_{eq}$ einen Wert von null hat, der Ladungswiderstand R und die Kapazität C mit fp durch eine Beziehung verknüpft werden, die ausgedrückt wird durch $R.C = 1/(2\pi.f_p)$.

FIG.1a

FIG.1b

EP 2 198 312 B1

FIG.2

FIG.3a

FIG.3b

EP 2 198 312 B1

FIG.4a

FIG.4b

EP 2 198 312 B1

FIG.5a

FIG.5b

EP 2 198 312 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4104920 A
- EP 0431807 A